# EUROPÄISCHE PATENTSCHRIFT

(11) **EP 0 534 149 B1**
(45) Veröffentlichungstag und Bekanntmachung des Hinweises auf die Patenterteilung: **22.03.1995**
(21) Anmeldenummer: 92114470.5
(22) Anmeldetag: 25.08.1992
(51) Int. Cl.: H01S 3/03

(54) **Bandleiterlaser**
Stripline laser
Laser à ruban

(30) Priorität: 23.09.1991 DE 4131623
(43) Veröffentlichungstag der Anmeldung: 31.03.1993
(73) Patentinhaber: SIEMENS AKTIENGESELLSCHAFT, 80333 München (DE)
(72) Erfinder: Welsch, Wolfgang, Dr. Dipl.-Ing., W-8011 Baldham (DE); Krüger, Hans, Dipl.-Phys., W-8000 München 83 (DE)

(56) Entgegenhaltungen:
- EP-A- 0 305 893
- EP-A- 0 451 483
- DE-A- 4 010 149
- US-A- 5 040 184

## Beschreibung

Die vorliegende Erfindung betrifft einen Bandleiterlaser nach dem Oberbegriff des Patentanspruchs 1. Ein derartiger Bandleiterlaser wurde in der DE-Anmeldung P 40 10 147.9 vorgeschlagen. In Bandleiterlasern wachsen die Auskoppelverluste schnell mit steigendem Abstand der Spiegel vom Bandleiterende. Dementsprechend sinkt die Laserausgangsleistung. Andererseits erhöht sich mit abnehmendem Spiegelabstand die Gefahr, daß die Entladung des Plasmas auf den Spiegel hin brennt und diesen schädigt.

Die Aufgabe, die der vorliegenden Erfindung zugrundeliegt, besteht darin, daß bei einem Laser der eingangs beschriebenen Art ohne eine Änderung seiner Daten der Abstand der Spiegel vom Bandleiterende verkleinert wird und daß dabei eine Entladung des Plasmas auf den Spiegel hin vermieden wird. Diese Aufgabe wird durch die kennzeichnenden Merkmale des Patentanspruchs 1 gelöst.

Ein elektrisch leitfähiges Material zwischen zwei Isolierstrecken stellt sich auf ein Potential ein, das durch die Widerstände in und entlang den Isolierstrecken und bei Hochfrequenzbetrieb auch durch die Kapazitäten über die Isolierstrecken bestimmt ist. Der Widerstand und die Kapazität können durch eine Beschaltung mit entsprechenden Bauelemente oder durch Einbringen entsprechender Widerstandsschichten zwischen dem Spiegel und den Elektroden bestimmt werden. In der Regel reicht jedoch eine entsprechende Dimensionierung der Spaltbreiten aus, um die gewünschte Spannungsteilung zu erreichen. Dabei ist vorteilhaft der Spiegel von beiden Elektroden durch Isolierstreifen getrennt, wobei die elektrischen Kapazitäten so eingestellt sind, daß der Spiegel in etwa an der Hälfte der zwischen den Elektroden anliegenden Spannung liegt. So ergibt sich ein symmetrischer und daher besonders günstiger Aufbau mit besonders schmalen Isolationsstreifen. Dies gilt insbesondere für eine Ausführungsform, in der zwischen einem Spiegel und beiden Elektroden gleiche Abstände liegen und in der die Isolationsstreifen durch Dielektrika mit derselben Elektrizitätskonstante gebildet werden.

Eine weitere günstige Ausführungsform ist gegeben, indem zwischen einer ersten Elektrode und dem Spiegel kein Abstand liegt und indem zwischen einer zweiten Elektrode und demselben Spiegel ein Abstand, eine Hilfselektrode und ein weiterer Abstand liegt, wobei die Hilfselektrode auf einem Potential zwischen dem des Spiegels und dem der ersten Elektrode liegt.

Dabei werden die Isolationsstreifen in einer besonders einfachen Ausführungsform durch Spalte gebildet. Die Spalte können aber auch durch Isolierstoff, insbesondere Keramik ausgefüllt sein. Der Spiegel ist vorteilhaft mit plasmastabilen Schichten überzogen. Die plasmastabile Schicht verhindert auch eine Zerstörung durch Strahlung aus dem Plasma bzw. durch Ionen aus dem Plasma, die insbesondere bei hohen Intensitäten praktisch nicht zu vermeiden sind.

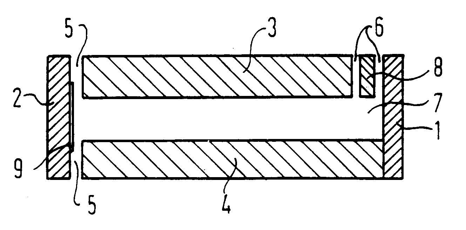

Die Erfindung wird nun anhand einer Figur näher erläutert. Sie ist nicht auf das in der Figur gezeigte Beispiel beschränkt. Die Figur zeigt einen erfindungsgemäßen Bandleiterlaser in geschnittener Ansicht schematisch.

Zwei Spiegel 1 und 2 sind von Elektroden 3 und 4 durch Isolationsspalte 5 und 6 getrennt. Die Isolationspalte 5 gewährleisten, daß der Spiegel 2 gegenüber beiden Elektroden 3, 4 auf einem Potential liegt, welches unter der Plasmabrennspannung bleibt. Die Isolationsspalte 5 sind vorteilhaft gleich breit ausgebildet, so daß sich das Potantial des Spiegels 2 auf die Mitte der Potentiale der beiden Elektroden 3, 4 einstellt. Der Spiegel 2 ist zusätzlich durch eine plasmastabile Schicht 9 geschützt, so daß eine Zerstörung des Spiegels durch Strahlung aus dem im Entladungsspalt 7 erzeugten Plasma bzw. durch Ionen aus dem Plasma verhindert wird.

Der Spiegel 1 ist mit einer Elektrode 4 unmittelbar verbunden, wobei die Elektrode 4 vorzugsweise an Masse liegt. Die andere Elektrode 3 ist vom Spiegel 1 durch zwei Isolationsspalte 6 getrennt, die eine Hilfselektrode 8 als elektrisch leitfähige Strecke zwischen sich einschließen. Auch hier ist ein Überschlag des Plasmas auf den Spiegel 1 verhindert, da die Plasmabrennspannung jeweils höher liegt als die Spannung zwischen der Elektrode 3 und der Hilfselektrode 8 bzw. der Hilfselektrode 8 und dem Spiegel 1. Auch die Isolationsspalte 5 und 6 sind vorzugsweise gleich breit ausgebildet, so daß sich an der Hilfselektrode 8 die Hälfte der zwischen den Elektroden 3 und 4 anliegenden Spannung ausbildet. Die Hilfselektrode 8 hat dabei vorteilhafterweise gute Wellenleitereigenschaften. Sie ist in diesem Fall ein Teil des Bandleiters.

## Patentansprüche

1. Bandleiterlaser, in dem Spiegel (1,2) an einem Bandleiter angrenzen und bei dem zwischen zumindest einer Elektrode (3,4) und einem elektrisch leitfähigen Spiegel eine Isolationstrecke (5,6) angeordnet ist, **dadurch gekennzeichnet,** daß im Bereich des elektrisch leitfähigen Spiegels (1) zwischen gegenpoligen Elektroden (3,4) zumindest zwei Isolationsstrecken (6) angeordnet sind, daß zwischen den Isolationsstrecken (6) eine elektrisch leitfähige Strecke (8) liegt und daß die Anordnung der Isolationsstrecken eine Spannungsteilung gewährleistet, welche die Spannung von der dem Spiegel benachbarten elektrisch leitfähigen Strecke zum Spiegel hin unter der Brennspannung des Plasmas hält.

2. Bandleiterlaser nach Anspruch 1, **dadurch gekennzeichnet,** daß der Spiegel (2) von den beiden Elektroden (3,4) durch je eine Isolationsstrecke (5) getrennt ist und daß die Kapazitäten so eingestellt sind, daß sich am Spiegel in etwa die Hälfte der zwischen den Elektroden liegenden Spannung ausbildet.

3. Bandleiterlaser nach Anspruch 2, **dadurch gekennzeichnet,** daß die Isolationsstrecken untereinander gleich breite Isolationsspalte sind.

4. Bandleiterlaser nach Anspruch 1, **dadurch gekennzeichnet**, daß zwischen einer ersten Elektrode (4) und dem Spiegel (1) kein Abstand besteht, daß zwischen einer zweiten Elektrode (3) und dem Spiegel ein Abstand (6), eine Hilfselektrode (8) und ein weiterer Abstand (6) liegt und daß die Hilfselektrode (8) auf einem Potential zwischen dem des Spiegels und dem der zweiten Elektrode liegt.

5. Bandleiterlaser nach Anspruch 1, **dadurch gekennzeichnet,** daß der Spiegel mit einer plasmastabilen Schicht (9) überzogen ist.

## Claims

1. Stripline laser in which mirrors (1,2) adjoin a stripline and in which an insulation path (5,6) is arranged between at least one electrode (3,4) and an electrically conductive mirror, characterized in that in the area of the electrically conductive mirror (1), at least two insulation paths (6) are arranged between oppositely polarised electrodes (3,4), in that an electrically conductive path (8) is located between the insulation paths (6), and in that the arrangement of the insulation paths ensures a voltage division which keeps the voltage from the electrically conductive path adjacent to the mirror towards the mirror below the service voltage of the plasma.

2. Stripline laser according to Claim 1, characterized in that the mirror (2) is separated from the two electrodes (3,4) by in each case one insulation path (6), and in that the capacitances are set in such a manner that approximately half of the voltage between the electrodes forms at the mirror.

3. Stripline laser according to Claim 2, characterized in that the insulation paths are insulation gaps which have identical widths.

4. Stripline laser according to Claim 1, characterized that there is no space between a first electrode (4) and the mirror (1), in that there is a space (6), an auxiliary electrode (8) and a further space (6) between a second electrode (3) and the mirror, and in that the auxiliary electrode (8) is at a potential between that of the mirror and that of the second electrode.

5. Stripline laser according to Claim 1, characterized in that the mirror is coated with a plasma-stable layer (9).

## Revendications

1. Laser à guide d'ondes à ruban, dans lequel des miroirs (1,2) jouxtent un guide d'ondes à ruban et dans lequel une section d'isolation (5,6) est disposée entre au moins une électrode (3,4) et un miroir électriquement conducteur, caractérisé par le fait que dans au moins deux sections d'isolation (6) sont disposées au voisinage du miroir électriquement conducteur (1) entre des électrodes (3,4) ayant des polarités opposées, qu'une section électriquement conductrice (8) est disposée entre les sections d'isolation (6) et que la disposition des sections d'isolation garantit une répartition de tension, que présente la tension depuis la section électriquement conductrice voisine du miroir en direction de ce miroir, sous la tension d'activation du plasma.

2. Laser à guide d'ondes à ruban suivant la revendication 1, caractérisé par le fait que le miroir (2) est séparé des deux électrodes (3,4) par des sections d'isolation respectives (6), et que les capacités sont réglées de telle sorte qu'approximativement la moitié de la tension présente entre les électrodes s'établit au niveau du miroir.

3. Laser à guide d'ondes à ruban suivant la revendication 2, caractérisé par le fait que les sections d'isolation sont des fentes d'isolation ayant des largeurs identiques.

4. Laser à guide d'ondes à ruban suivant la revendication 1, caractérisé par le fait qu'il n'y a aucune distance entre la première électrode (4) et le miroir (1), qu'une distance (6), une électrode auxiliaire (8) et une autre distance (6) sont présentes entre une seconde électrode (3) et le miroir et que l'électrode auxiliaire (8) est placée à un potentiel situé entre celui du miroir et celui de la seconde électrode.

5. Laser à guide d'ondes à ruban suivant la revendication 1, caractérisé par le fait que le miroir est recouvert par une couche (9) stable vis-à-vis du plasma.
